# EUROPEAN PATENT APPLICATION

(11) **EP 1 729 446 A1**
(43) Date of publication of application: **06.12.2006**
(21) Application number: 06114383.0
(22) Date of filing: 23.05.2006
(51) Int. Cl.: H04L 12/24, H04L 29/12

(54) **A method circuit and system for remotely updating a network appliance**

(30) Priority: 31.05.2005 US 141248
(71) Applicant: AudioCodes Ltd., 70151 Airport City, Lod (IL)
(72) Inventor: Richardson, Eitan, 71700, Modi'in (IL); Elharrar, Yair, 62494, Tel Aviv (IL)
(74) Representative: Andersson, Björn E.

(57) **Abstract**

A method is provided, for remotely updating information to, and controlling, a network appliance, which resides in a private location behind a network address translator ("NAT"), from a remote update server ("RUS") that resides in a public location, the Internet Protocol ("IP") address of, and a destination port number on, the RUS being known to the network appliance. The NAT may intermittently forward from the network appliance initialization messages that may be received at the RUS via its destination port. Responsive to the initialization messages being received at the RUS, the RUS may determine the source IP address and port number on the NAT from which the messages were received and send update data and/or control signal(s) via the destination port to the port number on the NAT. The NAT may then forward the update data and/or control signal(s) to the network appliance based on a corresponding address binding that is activated by the NAT. The intermittent transmission of the initialization messages maintain the address binding for as long as necessary to complete communication/control sessions between the RUS and the network appliance.

## Description

### FIELD OF THE INVENTION

The present invention relates generally to the field of communications and internet Protocol (IP) based networks. In particular, the present invention relates to a method for communicating with and updating a network appliance placed 'behind' one or more Network Address Translators ("NAT's") and to an appliance and server utilizing the method.

### BACKGROUND OF THE INVENTION

Over the past several years, the use of distributed data networks such as the Internet has experienced explosive growth. A significant portion of this growth relates to the expanded use of pear-to-pear and client-server applications such as file sharing systems, email systems, and the World Wide Web (the Web - comprising an ever increasing number of Transmission Control Protocol ("TCP/IP") content servers accessible using TCP/IP client application such as browsers). More recently, the transmission of voice and video over internet Protocol ("V²olP") has become more prevalent and has contributed to a large amount data traffic traversing the Internet

Client computers can access pages residing on Web sites using a variety of commonly available client software including browser software packages such as internet Explorer (Microsoft). Netscape (Netscape) or other similar product. The browser software and the server system communicate with each other using the hypertext transfer protocol ("HTTP"). The client issues a request for a particular resource on the web using a uniform resource identifier ("URI"); typically in the case of an HTML web page, the URI will be a uniform resource locator ("URL"). A URL specifically identifies a particular resource such as a web page on the web. The URL will indicate the particular computer on the web on which the desired web page resides, as well as the location of the desired web page on that computer.

Network elements which include V²olP applications and/or devices typically do not use TCP/IP, but rather they use the user datagram protocol ("UDP"), a connectionless protocol that, like TCP, runs on top of IP networks. Unlike TCP/IP, UDP/IP provides very few error recovery services, Offering instead a direct way to send and receive datagrams over an IP network. V²olP data packets may be produced and transmitted via UDP/IP by a multitude of applications running on a general purpose computer and/or by gateways which receive voice or video related signals in one or more ports and generate and transmit V²olP packets through an IP network connection port.

Most nodes (i.e. devices or network appliances) connected to the internet reside within a private network, which private networks are typically connected to a larger public network (such as the Internet) through a gateway with a single Internet protocol (lP) address that is valid on the public network. Nodes on the private network typically do not have IP addresses that are valid on the public network. Internet gateways may include a router and/or a firewall, each may 'hide' the local IP address of devices or network appliances on the private side of the gateway from being 'seen' from (i.e., identified by) the public side of the network.

Network address translation ("NAT") is a common feature of gateways connecting devices residing on private networks. NAT provides for the source IP address fields of packets transmitted by these devices or appliances to be translated by the gateway from the respective device's or appliance's local IP address to the IP address of the gateway.

In order for devices or appliances on the public network to transmit packets to nodes on the private network, the packets must be addressed to the public IP address of the gateway, which must then determine which node on the private network is the intended recipient. One common approach to this problem is using network address port translation ("NAPT"). In a NAPT gateway, particular public network sockets of the gateway are mapped to particular sockets on nodes of the private network. Thus, when a packet from the public network is received on a particular socket at the network gateway, it is automatically forwarded to the socket on the private network to which the public network socket is mapped.

For the purposes of this application, a "port" refers to a logical network connection point having a unique identifier with respect to a particular network node. For example, in the internet protocol, each network node may engage in multiple simultaneous connections on distinct numbered ports, eg. port 25. A "socket" refers to a particular port on a particular node, and is referred to by the concatenation of a network address and a port identifier.

The wording 'NAT' as used herein is to be construed as refering also to Network Address Port Translation (NAPT) devices. The wording 'network appliance' (sometimes just 'appliance', for short) is to be construed as referring collectively to any type of media gateway serving as an access point through which end-users may access an IP-based network such as the Internet, including media gateways that are designed, or configured, to handle voice, video, multimedia data, etc.

By 'remote update server' is meant a server residing in an lP-based network, on the 'public' side of a NAT, one function of which is updating network appliances. Such remote update server is sometimes referred to as 'element management system' ("EMS") or, simply, 'manager'.

Network appliances are said to belong to what is generally referred to as the 'local' , or 'private', side of the Internet. Namely, such an appliance is part of a 'local', 'private' or, equivalently, autonomous, data network (i.e., domain), which is part of the entire Internet system. Remote update servers are said to belong to what is generally referred to as the 'external', 'global' or 'public', side of the Internet. Remote update servers can control network appliances by utilizing the simple network management protocol ("SNMP") protocol. However, this is not necessarily so, as other communication protocols can be utilized as well for this purpose (e.g., HTTP).

Because of various considerations relating to the use of Internet Protocol (IP) addresses, NATs are more and more incorporated into the Internet backbone. The functionality of NATs is well known to those skilled in the field of Internet, and, therefore, no further description thereof will be given herein beyond what is essential for the understanding of the present invention. Various aspects and considerations relating to the functionality of NATs are addressed in, for example, 'Request for Comments' (RFC): RFC 3022 ('Traditional NAT'), RFC 2663 ('IP Network Address Translator (NAT) Terminology and Considerations'), RFC 3235('IP Network Address Translator (NAT) - Friendly Application Design Guidelines), and RFC 2993 ('Architectural implications of NAT').

Briefly, NAT's fundamental role is altering the IP addresses in the IP header of packets. Therefore, if a NAT is placed between two computers that are trying to communicate with one another from disparate address realms (i.e., domains), such a communication may exist by modifying the end-node addresses en-route (i.e., by the NAT) and maintaining the modified addresses so that datagrams pertaining to current sessions are routed to the correct end-node in either domain.

NAPT schemes enable public network sockets to be dynamically mapped to private network sockets when a network connection is initiated from a private network socket. However, under the NAPT scheme connection, requests originating from public network nodes can be processed by the gateway only if one of the gateway's public network sockets has been previously mapped to a socket on one of the private network nodes. This mapping must be done manually by a user at the gateway.

Utilization of NATs in conjunction with; e.g., SNMP protocol is problematic. The problem lies in that whenever the 'manager' (ie., update remote server) wishes to communicate with an 'agent' (i.e., the network appliance), the manager generates corresponding 'GET' messages and transmits them, via one of its ports ('X') that is chosen on a random basis, to a known PORT (i.e., port 161) of the agent. In response to the GET message being received at the agent, the agent generates corresponding 'RESPONSE' message and transmits it via a known port (i.e., port 161) to the random port 'X' of the manager. However, the problem with NATs is that they block 'GET' messages from reaching the intended agent's port (i.e., port 161) because no mapping is created by the NAT in respect of the destination port (i.e., agent's port 161). Consequently, the agent will not receive the 'GET' message and, therefore, it will not generate and transmit a 'RESPONSE' message to the manager. The problem is even worsened by the randomness that characterizes also the destination and origin ports of the other types of messages used by the SNMP protocol; i.e., the 'TRAP' and 'SET' messages.

Another problem exists, which relates to NATs traversal; i.e., the SNMP's incapability to support files download. Namely, in order to allow such downloads, a client, or an EMS (sometimes just 'manager'), will use the HyperText Transfer Protocol (HTTP) instead of the SNMP protocol. In this context, the manager is said to act as an 'HTTP client', whereas the appliance, with which the server is in communication, is said to act as the 'HTTP server', meaning that the manager will send ('push') files to the network appliance. However, such files downloadings would be inhibited by a NAT if it is placed between the manager and the network appliance, because attempts made by the manager to establish the required HTTP/TCP connection(s) will be invalidated by the NAT due to the NAT altering the involved IP address and ports.

Put differently, when performing management and diagnostics operations, network appliances act as a web server or SNMP agent and, as such, they 'listen' on, or monitor, predefined Transmission Control Protocol ("TCP") or User Datagram Procol (UDP) ports. However, due to the addresses translation and multiplexing that characterize NATs, such UDP or TCP ports, when residing on the private/local side of (i.e., 'behind') the NAT, will not be accessible to systems/devices residing on the public, global, or external side of the internet.

It is therefore an object of the present invention to provide a method for making NATs fully transparent to bi-directional communications between remote update servers and network appliances.

It is another object of the present invention to provide a method for rendering appliances/agents manageable through NATs.

It is yet another object of the present invention to provide a method for allowing transferring files in an IP-based environment which includes NATs.

Other objects and advantages of the invention will become apparent as the description proceeds.

### SUMMARY OF THE INVENTION

In respect of NATs and PATs, by 'address binding' is meant herein the phase in which a private IP address (and also private port number, if a PAT is involved) of a network appliance in a local/private network (i.e., a network 'behind' a NAT) is temporarily assigned a public address (and also public port number, if a PAT is involved) by the NAT/PAT, which, depending on the type of NAT/PAT's involved, may also associate the assigned public address/port to the public address (and port) of a remote update server ("RUS"), which resides in a global/public location, for providing seamless and transparent routing of datagrams between the network appliance and the RUS. Once a binding between two addresses is setup; namely, the address binding becomes active, all subsequent data exchanges between the private address of a specific appliance and the public address of a specific RUS will be made using the same address binding; that is, as long as the address binding is maintained active, or in force.

In contradistinction, by 'address unbinding' is meant herein a state in which the private address (and port, in case of a PAT) of the network appliance is no longer associated with the public address (and port) previously assigned to it by the NAT/PAT. A NAT/PAT will perform address unbinding when it believes (i.e., based on commonly known indicators) that the last session using the address binding has terminated.

In general, the present invention is characterized by having a network appliance lending itself identifiable by, or publicized to, a remote update server via one NAT, or via several cascaded NATs, prior to the remote update server initiating update, management and/or control sessions with the network appliance via said NAT The present invention is also characterized by that a network appliance is made controllable by HTTP protocol via one or more cascaded NATs, where the control of the network appliance comprises, *inter alia,* remote activation of a graphical user interface ("GUI") on the appliance by a remote standard browser, such as the Microsoft Internet Explorer.

in general, the objectives of the present invention are accomplished by causing NATs to continuously keep addresses bindings active between updateable/controllable network elements and updating/controlling network elements, and by forcing both the network appliance and the RUS to use their own fixed predefined port number for both transmitting and receiving packets using the active address binding.

As part of the present invention, the present invention provides a method of remotely updating information to, and controlling, a network appliance residing in a private location behind a network address translator ("NAT") from a remote update server ("RUS") residing in a public location, the Internet Protocol ("IP") address of, and a destination port number on, the RUS being known to the network appliance, comprising.

Intermittently receiving from the NAT, via the destination port, initialization messages that the NAT forwarded from the network appliance,

Responsive to the initialization message being received, determining the source IP address and port number on the NAT from which the messages were received, and

Sending update data and/or control signal(s) via the destination port to the port number on the NAT, which NAT forwarding the update data and/or control signal(s) to the network appliance based on a corresponding address binding that is activated by said NAT responsive to the initialization messages being intermittently transmitted from the network appliance.

As part of the present invention, the present invention also provides a method of activating in a network address translator ("NAT") an address binding for remotely updating information to, and controlling, a network appliance residing behind a network address translator ("NAT") from a remote update server ("RUS") residing in a public location, the Internet Protocol ("IP") address of, and a destination port number on, the RUS being known to the network appliance, comprising;

Receiving an initialization message from the network appliance. The initialization message is generated by the network appliance and may be transmitted therefrom, via the NAT, to the destination port on the RUS;

Responsive to the initialization message being received by the NAT:

Activating a corresponding address binding by assigning a public address to the private address of the network appliance and associating the temporarily assigned public address with the public address of the RUS, whereby to activate the address binding through which update data and/or control signal(s) may be transmitted from the RUS to the network appliance; and

Intermittently receiving initialization messages from the network appliance for renewing the activation of the address binding, or maintaining a currently active binding (whatever the case may be).

As part of the present invention, the present invention provides a method of publicizing a network appliance by a network address translator ("NAT") to a remote update server ("RUS") for remotely updating information to, and controlling, the network appliance from the RUS, which appliance residing behind the NAT and having a private address and the Internet Protocol ("IP") address of, and a destination port number on, the RUS are known to the network appliance, comprising:

Receiving an initialization message from the network appliance. The initialization message is generated by the network appliance and transmitted therefrom, via the NAT, to the destination port on the RUS;

Responsive to the initialization message being received at the NAT, temporarily activating a corresponding address binding by assigning a public address to the private address of the network appliance; and

Intermittently receiving initialization messages from the network appliance for renewing the activation of the address binding, or maintaining a currently active binding (whatever the case may be), whereby to publicize a network appliance by the NAT to the RUS.

In some preferred embodiments of the present invention, the communication protocol used for communication between the network appliance and the RUS is the SNMP protocol, the initialization messages are 'TRAP' messages, and, while an address binding is active, the messages exchanged between the RUS and the network conform to 'GET', 'RESPONSE' and 'SET' massages, and two predefined ports on the network appliance and RUS; namely, are port numbers 161 and 162, respectively, are utilized for carrying out the communication.

As part of the present invention, the present invention also discloses a network appliance that is updateable and controllable by a remote update server ("RUS") the IP address and port number of which are known to the network appliance, which network appliance resides in a local location behind a NAT, comprising:

A memory for pre-storing therein the IP address and destination port number of/on the RUS;

Generator for generating an 'initialization message',

Transmitter for intermittently transmitting the initialization message(s) through a predefined port on the network appliance to the RUS via the NAT; and

Response means, responsive to update and control signals being received at the predefined port on the network appliance from the RUS via the NAT.
Wherein,

The NAT assigns a public address to the private address of the network appliance and associates it to the stored IP address of the RUS for activating a corresponding address binding through which the RUS may transmit to the appliance update data and/or control signals to be responded by the response means of the network appliance.

As part of the present invention, the present invention also discloses a remote update server ("RUS") for updating information on a network appliance residing behind a NAT and having a private address, the internet Protocol ("IP") address of the RUS and a destination port number on it are known to the network appliance, comprising.

A network communication module, to receive through the destination port intermittently transmitted initialization messages that the NAT forwarded from the network appliance;

Response means, for generating a response (e.g., update data and control signals) to the received initialization messages; and

Transmitter for transmitting through the destination port on the RUS the response to the NAT,
Wherein,

The NAT assigns a public address to the private address of the network appliance and associates it to the stored IP address and destination port number of the RUS for activating a corresponding address binding through which the RUS can transmit to the network appliance update data and/or control signals to be responded by the network appliance.

As part of the present invention, a method is provided of downloading a file to a network appliance from a RUS via network address translator ("NAT"), the IP address and destination port number on the RUS being known to the network appliance, comprising.

Receiving 'TRAP' messages that the NAT intermittently forwarded from a predefined port number on the network appliance, wherein the NAT activates a corresponding address binding through which information may be exchanged between the network appliance and the RUS;

Responsive to the initialization messages being received at the RUS, determining the IP address of the NAT;

Sending to the IP address of the NAT the uniform resource locator ("URL") of the file in SNMP 'SET' format (i.e., as a 'SET' message), wherein the NAT utilizes the active address binding to forward the SET massage, including the URL, to the network appliance, and

Responsive to the URL being received at the network appliance, obtaining the file from the RUS using; e.g., HTTP protocol.

As part of the present invention, a method is provided of updating, and generally controlling, a media gateway by a client via an intermediator and a NAT The gateway may include a web-server and first and second ports that are internally interconnectable to bi-directionally deliver messages. The gateway may reside behind said NAT. The method may comprise:

Intermittently transmitting from the first port, and via the NAT, initialization messages to a first port on the intermediator;

Responsive to the initialization messages being received via the first port on the intermediator, determining the source IP address of the NAT and forwarding the initialization message to the client via a second port on the intermediator;

Responsive to the initialization messages being received at the client, transmitting to the second port on the intermediator update/control signal(s);

Responsive to the update/control signal(s) being received at the intermediator, forwarding the update/control signal(s) to the IP address of the NAT via said first port on said intermediator, which NAT forwards the update/control signal(s) to the first port on the gateway; and

interconnecting the first and second ports on the gateway, whereby to deliver the update/control signal(s) to the web-server to update/control therewith the gateway.

In some preferred embodiments of the present invention, the gateway includes a private IP forward application ("IPFA") for controlling the internal interconnections between the first and second ports thereof.

In some preferred embodiments of the present invention, the first and second ports of the intermediator (i.e., the public gateway) constitute one pair of a plurality of pairs of first and second ports, the internal interconnectivity of them all being controlled by a public IP forward application ("IPFA") for allowing one or more clients to update/control one or more gateways, each of which may reside behind one NAT, or behind a plurality of cascaded MATs.

In some preferred embodiments of the present invention, there is provided a manager computer for remotely browsing a web application, running on the gateway.

In some preferred embodiments of the present invention, the first and second ports on the intermediator are TCP ports and the gateway is updated/controlled using hypertext transfer protocol ("HTTP").

In an aspect of the present invention, by 'NAT' is meant two or more NATs that are cascaded in respect to an active communication path existing between a network appliance and a remote update server ("RUS") and the active address binding consists also of mutual addresses associations which exist between each two adjacent NATs.

By 'known to the network appliance' is meant herein the public address of the RUS being made available, or accessible, to the network appliance (whenever required), such as by pre-storing the public address of the RUS in the network appliance, or externally to it, in which case it would be made retrievable to the network appliance whenever it desires to transmit an initialization message to the RUS.

By 'Intermittently' is meant herein each time interval, between each two consecutive initialization messages/packets, being sufficiently short for keeping the corresponding address binding (within the NAT) continuously active; i.e., for a sufficient time length that would allow the manager/server to freely update the network appliance whenever required.. For example, such intervals can be as short as 10 seconds. Of course, the time interval can be made configurable such that any interval, between some minimal value (e,g., 0.5 second) and some maximal value (eg., 5 minutes), can be chosen.

### BRIEF DESCRIPTION OF THE DRAWINGS

The subject matter regarded as the invention is particularly pointed out and distinctly claimed in the concluding portion of the specification, The invention, however, both as to organization and method of operation, together with objects, features, and advantages thereof, may best be understood by reference to the following detailed description when read with the accompanying drawings in which:

Fig. 1a schematically illustrates an exemplary usage of a NAT,

Fig. 1b (prior art) schematically illustrates a typical exchange of SNMP messages;

Fig. 2 schematically illustrates typical exchange of SNMP messages, according to a preferred embodiment of the present invention,

Fig. 3 schematically illustrates a multi-client/multi-NAT environment, according to another preferred embodiment of the present invention; and

Fig. 4 schematically illustrates messages flow in connection with the system shown in Fig. 3.

It will be appreciated that for simplicity and clarity of illustration, elements shown in the figures have not necessarily been drawn to scale. For example, the dimensions of some of the elements may be exaggerated relative to other elements for clarity, Further, where considered appropriate, reference numerals may be repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Unless specifically stated otherwise, as apparent from the following discussions, it is appreciated that throughout the specification discussions utilizing terms such as "processing", "computing", "calculating", "determining", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein

In particular, the method disclosed in the present invention is not limited to a specific type of a packet (or IP) network, communication protocol or standard for sending or relaying data.

Fig. 1a schematically illustrates an exemplary usage of a NAT. Remote update server 101 (typically owned and operated by a corresponding ISP - not shown) is connected to the internet 100. To Internet 100 are also connected 'n' network appliances (collectively designated as 102), only three of which are shown (i.e., (102/1, 102/2 and 102/n, End-user 103 is connected to appliance 102/2, via which he may exchange data with other end-users (not shown), service/content providers, etc.

The operation of network appliance 102/2 is controlled by update server 101, which can do so directly, in a traditional manner; namely, without using a NAT such as MAT 104, and over a communication path consisting of segments 105, 106 and 107. However, as described herein in connection with the proliferation of the Internet, there is a growing need to incorporate NATs, such as NAT 104, into the Internet infrastructure. Accordingly, attempts have been made to allow seamless and flawless incorporation of MATs into the Internet infrastructure, So far, such attempts have failed to provide adequate, consistent, solutions.

Referring to NAT 104, appliances 102 are said to reside within the 'private', or local, network of the Internet, whereas update server 101 is said to reside within the 'public', or external, network of the Internet. In respect of remote update server 101 and NAT 104, appliances 102 are said to reside 'behind' NAT 104.

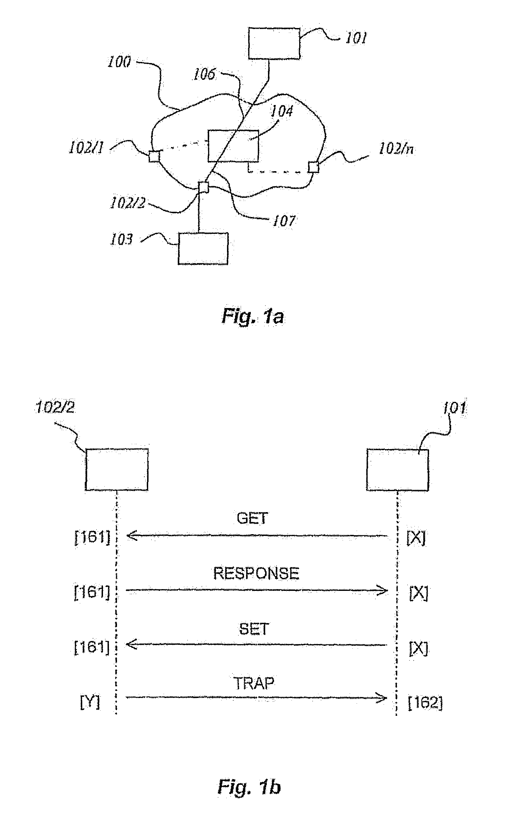

Fig. 1b (prior art) schematically exemplifies a typical SNMP message flow and PORT usage in a typical appliance-server environment, which does not include use of NATs Whenever there is a need for server 101 to update; e.g., the version of a software package/application, in network appliance 102/2, update server 101 initiates a communication session with network appliance 102/2. It does so by sending a (SNMP) 'GET' message from random PORT 'x' to PORT 161 of network appliance 102/2, as shown in Fig. 1b. In general, GET messages allow servers, such as update server 101, to request information from a network appliance, such as network appliance 102/2, about specific variables. Such a variable can relate, for example, to the current version status of the software/application used by a network appliance.

Responsive to the GET message, network appliance 102/2 generates a 'RESPONSE' message and forwards it via its port 161 to the random port on update server 101. The RESPONSE message can include information requested by update server 101 or an error indication as to why the request cannot be processed. If update server 101 needs to change a variable within network appliance 102/2, or it needs to control its operation in any way, it can do so by sending to network appliance 102/2, via random port 'x' and to port 161 of network appliance 102/2, a corresponding 'SET' message, 'TRAP' messages are forwarded by network appliance 102/2 to update server 101 via random port 'y' of network appliance 102/2 and to port 162 of update server 101. TRAP messages are traditionally intended to allow network appliance 102/2 to spontaneously inform update server 101 of an event that is deemed to be 'important'.

Placing a NAT, such as NAT 104, between update server 101 and network appliance 102/2 would be problematic in the following sense: update server 101 and network appliance 102/2 utilize random ports, designated 'x' and 'y', respectively, to forward and receive the GET, RESPONSE, SET and TRAP messages. For example, the GET message is forwarded from random port 'x' on update server 101 to network appliance 102/2. Likewise, the TRAP message is forwarded from random port 'y' on network appliance 102/2 to update server 101. Consequently, remote update server 101 (or, in this case, the 'manager' 101) will not have a valid IP address to send the 'GET' message to, because, in most cases, it would not 'know' the private IP address of the network appliance 102/2 (or, in this case, the 'agent'), or, if it does know it, any attempt made by manager 101 to send the GET message to port 161, believing it to be the agent's 102/2 port, will fail due to this port (i.e., port 161) being 'closed' on the NAT. Therefore, NAT 104 will inhibit the transmittal of the message to agent 102/2.

According to the present invention, and referring again to Fig. 1a, the problems described hereinbefore are obviated by pre-storing once the IP address of manager 101 in agent 102/2, after which agent 102/2 may utilize the pre-stored IP address and its own port 161 to transmit to manager 101, via NAT 104 and whenever required, an initialization message, possibly in the form of one or more packets, regarding its existence and readiness to exchange data with manager 101. The initialization message (usually forwarded as a 'TRAP' message) will cause NAT 104 to activate or reactivate (as the case may be) an 'address binding' to open through it an active communication path between manager 101 and agent 102/2, in which NAT 104 plays the role of a seamless and transparent mediator, both in outbound and inbound communications.

More specifically, upon receiving the initialization (i.e., 'TRAP') message from agent 102/2, NAT 104 assigns a public address (i.e., IP address and port number) to the agent's private address and associates the assigned public address to the (public) IP address of manager 101. Thereafter, based on the association between the two public addresses, NAT 104 forwards the TRAP message to port 162 of manager 101 which, upon receipt thereof, responds by looking for the source IP address and source port number, and, if desired or required, manager 101 transmits, through its port 162, a GET message to the (source) IP address of NAT 104. Then, based on the assignment, NAT 104 relays the GET message to port 161 of agent 102/2.

As described hereinbefore, NAT 104 performs address unbinding when it believes that the last session associated with an address binding has terminated. Therefore, agent 102/2 has to intermittently generate and transmit initialization messages to manager 101, to ensure that the address binding is sustained in NAT 104 as long as necessary, or as desired.

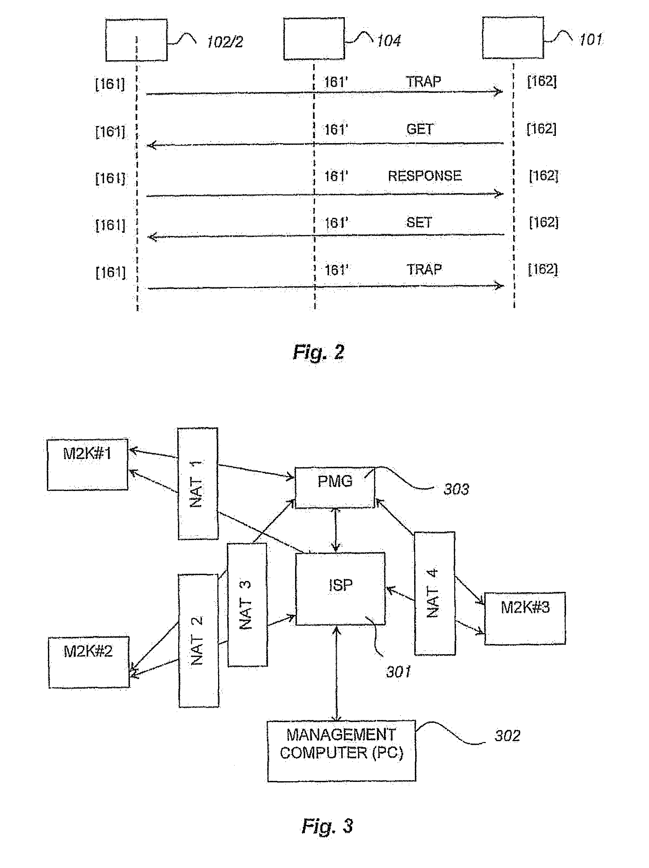

Fig. 2 schematically illustrates typical utilization of SNMP messages, according to a preferred embodiment of the present invention. Instead of using random ports on manager 101 and agent 102/2 (as illustrated in Fig. 1b), agent 102/2 is configured to use only one, predefined, port number, e.g., port number 161. Likewise, manager 101 is configured to use only one, predefined, destination port number; i.e., destination port number 162. This way, the randomness that traditionally characterizes usage of the SNMP protocol is obviated. The latter association (i,e., address bindings) is pictorially visualized in Fig. 2 as 161'. That is, 161' refers to some public port number that NAT 104 assigns to the original, private, port 161 on the network appliance.

Transmitting the initialization message from agent 102/2 to manager 101 via NAT 104 is implemented by use of TRAP messages. It is noted that agent 102/2 transmits to manager 101 the initialization messages as TRAP messages, without conveying any addressing information of port 161 on the agent 102/2. When the TRAP message is received at destination port 162 of manager 101, which is 'known' to network appliance 102/2, such as by storing it in manager 102, manager 101 sends the data/control signals to the IP address of the NAT, to a port number on the NAT (e.g., 161') that is associated by NAT 104 to the original port 161 on the network appliance 102/2

The TRAP messages are intermittently forwarded to manager 101 on a regular basis, so as to maintain the corresponding address binding active for as long as necessary. Now, remote manager 101 may access agent 102/2 via NAT 104 without suffering from the problems described hereinbefore. Namely, manager 101 can forward to agent 102/2 a GET message, etc. the way it would normally do, with the exception of the port numbers (previously being 'x' and 'y') being assigned for this task in advance.

Sometimes, it is desired to download a file to network appliance 102/2 from the manager 101. According to the present invention, this is accomplished by using the SNMP protocol to: (1) activate an address binding in the NAT 104 in a way described hereinbefore (i.e., intermittently transmitting to the NAT 104 'TRAP' message as initialization messages; (2) forward the URL of the file from the manager 101 to the network appliance 102/2, by using the active address binding; and (3) obtaining the requested file from the manager 101 via NAT 104 using the URL.

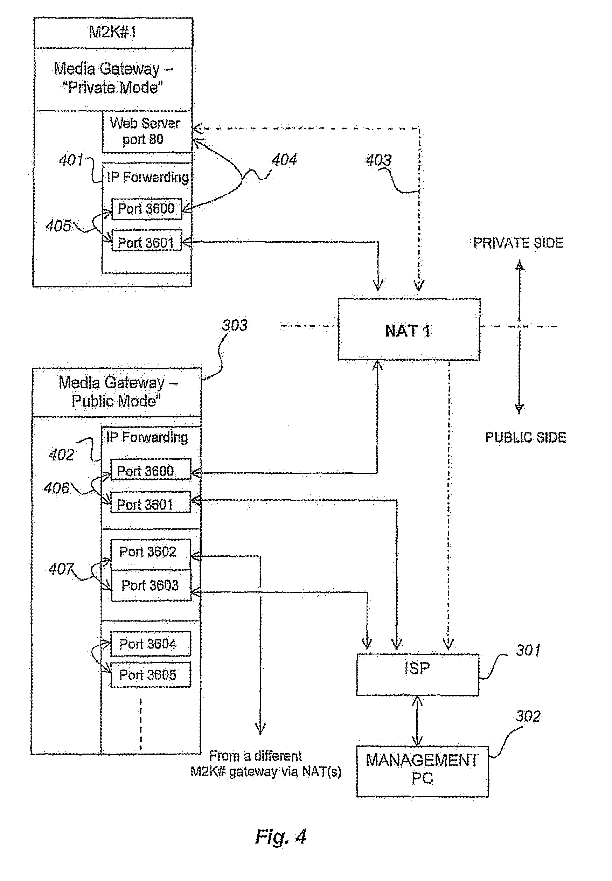

Turning now to Figs. 3 and 4, they schematically illustrate accessing a device running a Web server and residing in the private side in respect of a NAT from a remote PC running a standard Web browser,

Fig. 3 schematically illustrates an exemplary system for remotely controlling media gateways by an Internet Service Provider (ISP), according to another preferred embodiment of the present invention.

ISP 301 is shown connected to several NATs (i.e., NAT1 to NAT4), through which it may update, and generally control the operation of, respective exemplary network appliances, designated 'M2K #1', 'M2K #2' and 'M2K #3'. In general, the task of management computer 302 is to control a web-browser associated with the ISP.

According to the present invention, the problems relating to the use of MATs are obviated by creating pairs of TCP sockets such that a NAT associates specific TCP socket on its 'private', or 'public' side, with a corresponding TCP socket on its 'public', or 'private' side, respectively. Each such association thus defines a pair of TCP sockets, and each one of the pairs of TCP sockets defines an active TCP connection that is utilized by ISPs to control network appliances such as gateway M2K#1.

The pairs of TCP sockets are established thru use of a dedicated public media gateway ('PMG', 303) and IP Address Forwarding Applications (IAFAs) 401 and 402 (Fig. 4). PMG 303, being an intermediator, includes a 'network communication module' (not shown) and controller (not shown) that employ such an IAFA application (402, Fig. 4). PMG 303 mediates between the ISP 301 (being a remote update server - "RUS") and each one of the NATs (NAT1 to NAT4) to update/control thereby the respective appliance M2K #1, M2K #2 and M2K #3. Each one of network appliances M2K#1 to M2K#4, includes an 'initialization message generation and transmission' unit (not shown) to intermittently generate and transmit, via the corresponding NAT, one or more initialization messages to an IP address associated with RUS 301. Each network appliance employs its own private IAFA application. For example, unit M2K#1 employs IAFA application40, so as to allow pairs of TCP sockets to be predefined on, and having their interconnectivity controlled by, each appliance. PMG 303 includes an IAFA application 402 for the same purpose of predefining and controlling the interconnectivity of pairs of TCP sockets, and corresponding TCP sockets are associated to one another by the respective NAT, to form pairs of TCP sockets. The IAFA application 402 associated with PMG 303 is referred to as 'public' IAFA application, whereas IAFA applications associated with appliances M2K#1, M2K#2, etc., is referred to as 'private' IAFA applications.

Accordingiy, TCP connections, which allow flawless utilization of NATs, are established by having each private IAFA application cooperating with the corresponding ISP's public IAFA application (e.g., 402). In a sense, utilizing IAFA applications, as disclosed herein, allows establishing virtual, TCP-oriented, communication paths that obviates the problems described herein in connection with NATs.

Fig. 4 schematically illustrates an exemplary usage of IAFA applications, according to a preferred embodiment of the present invention. For the sake of simplicity, a reference is only made to the update/control of one customer's network appliance (i.e., M2K#1) via its respective NAT (i.e., NAT1).

Network appliance M2K#1 is provided with a private IAFA application 401 that utilizes, according to this example, preconfigured ports 3600 and 3601 to internally communicate with (i.e., 'loop back' to) web server's port 80(404), and to externally communicate with NAT1, respectively. In appliance M2K#1, ports 3600 and 3601 are internally 'bridged' (405) by IAFA 401. Since appliance M2K#1 is an 'end device' (i.e., an intended final destination), it makes use of only one pair of ports (i.e., ports 3600 and 3601). A commonly used solution for managing an appliance, such as appliance M2K#1, is by way of a web-server. Such a web-server is not intended to be accessed by end users for the purpose of 'normal' browsing. The web-server of appliance M2K#1 is such a web-server. Namely, it resides in M2K#1 only for the purpose its management by, e,g., manager PC 302 of ISP 301.

PMG 303 is provided with a public IAFA application 402. However, in contradistinction to appliance M2K#1, PMG 303 normally has to communicate with a plurality of appliances such as media gateway M2K#1. Therefore, PMG 303 has an appropriate number of internally 'bridgeable' pairs of dedicated ports, the interconnectivity of which is controlled by IAFA application 402.

Accordingly, ports 3600 and 3601 are preconfigured and internally bridged (406, Fig. 4) to allow seamless and transparent communication, via NAT1, between ISP 301 and appliance M2K#1. Such a communication will be implemented using the association established by NAT1, between port 3600 of PMG 303 and port 3601 of appliance M2K#1.

Likewise, ports 3602 and 3603 are also preconfigured and internally bridged (407) to allow seamless and transparent communication, via NAT1, between ISP 301 and a different appliance (e.g., M2K#2). Of course, the number of pairs of internally-bridged ports will, at least, match the number of media gateways that are intended to be controlled by ISP 301 via NAT1.

Private IAFA applications initiate TCP sessions with the public IAFA application (i.e., in PMG 303) and, upon initiations of such sessions, the private IAFA applications obtain data that is first forwarded from ISP 301 to PMG 303, and, then, forwarded to it by PMG 303 via NAT1,

Using its initialization packet generation and transmission unit, appliance M2K#1 intermittently generates and transmits, via NAT1, one or more initialization packets to an IP address associated with remote update server 301, for allowing NAT1 to sustain a corresponding TCP connection. The latter unit employs IAFA application 401 for this purpose. The one or more initialization packets convey data relating to the identity of a port on M2K#1 with which ISP 301 is to communicate.

In order for ISP 301 to assess whether appliance M2K#1 is to be updated, ISP 301 causes the content of the GUI of M2K#1 to be displayed on its own standard web browser (e.g., Microsoft internet Explorer). This feature is implemented by the ISP 301 communicating with; e.g., port 3601 of PGM 303, which masquerades as a web server by forwarding, and receiving all data to, and from, M2K#1.

The exchange of packets, between ISP 301 and appliance M2K#1, is made possible thru the initiation of a TCP session with PMG 303, which includes the opening of TCP ports 3601 and 3600 on appliance M2K#1 and PMG 303, respectively. The latter two ports (3601 and 3600) are regarded by NAT1 as a pair of TCP sockets and registered by it as such in an appropriate association/translation table.

After a TCP connection is established between ports 3601 and 3600 (of appliance M2K#1 and PMG 303, respectively), data streams can be freely exchanged between ISP 301 and appliance M2K#1, via NAT1. The TCP connection is sustained by intermittently forwarding the initialization packets.

Since it is the private IAFA applications (e.g., 401) that initiate the TCP sessions, there is no problem of NAT traversal (or even multiple NAT traversal), as long as a firewall does not block a relevant port, in which case a different port may be configured/utilized.

Management PC 302 allows enhancing update and control options of ISP 301. For example, the operator of management PC 302 can access web interfaces of different private media gateways by browsing, e.g., to http://service.provider.m2k.addr:3601/ http://service.provider.m2k,addr:3603/etc.

Secure HTTP (HTTPS) can be configured as well by utilizing, e.g., port 443 on the private media gateway (instead of port 80), and browsing to, e.g., https.//service.provider.m2k.addr.3601/, etc.

Referring to the system of Fig. 3, encryption is 'end-to-end' and the mediating services do not perform any cryptography. However, if so desired, security measures may be added, by, e.g., pre-configuring a "shared secret" (generally known in the field of cryptography as "challenge-response" application), that will be known to all media gateways, and requiring proof of authenticity whenever the private IAFA application connects to the public IAFA.

According to an aspect of the present invention, the functionality of the PMG 303 can be embedded, affiliated or incorporated into management PC 302. In such a case, a small dedicated GUI-oriented utility ('NAT Helper') will run on management PC 302 for allowing easy and friendly management of the private network appliances.

While some embodiments of the invention have been described by way of illustration, it will be apparent that the invention can be carried out in practice with many modifications, variations and adaptations, and with the use of numerous equivalents or alternative solutions that are within the scope of persons skilled in the art, without departing from the spirit of the invention or exceeding the scope of the claims.

## Claims

1. A method of remotely updating information to, and controlling, a network appliance residing in a private location behind a network address translator ("NAT") from a remote update server ("RUS") residing in a public location, the Internet Protocol ("IP") address of, and a destination port number on, the RUS being known to the network appliance, comprising:
intermittently receiving from said NAT, via said destination port, initialization messages that said NAT forwarded from said network appliance;
responsive to said initialization message being received, determining the source IP address and port number on the NAT from which said messages were received; and
sending update data and/or control signal(s) via said destination port to said port number on said NAT, which NAT forwarding said update data and/or control signal(s) to said network appliance based on a corresponding address binding that is activated by said NAT.

2. The method of claim 1, wherein activating the address binding comprising:
receiving by the NAT an initialization message from the network appliance;
responsive to the initialization message being received:
temporarily assigning a public address to the private address of said network appliance, whereby to activate the address binding through which update data and/or control signal(s) may be transmitted from the RUS to said network appliance; and
receiving by said NAT additional initialization messages from said network appliance for renewing the activation of the address binding or for maintaining a currently active binding, whatever the case may be.

3. The method of claim 2. wherein activating the address binding further comprising associating, the assigned public address of the network appliance with the public address of the RUS.

4. The method of claim 1, wherein the communication protocol used for communication between the network appliance, and the RUS is the SNMP protocol.

5. The method of claim 4, wherein the initialization messages are transmitted from the network appliance as 'TRAP' messages, and, while an address binding is active, the messages exchanged between the RUS and said network conform to 'GET', 'RESPONSE' and 'SET' massages, and the communication is carried out by utilizing port numbers 161 and 162 on said network appliance and said RUS, respectively.

6. The method of claim 4, wherein the RUS forwards to the IP address of the NAT a uniform resource locator ("URL") of a file as a 'SET' message; wherein,
said NAT utilizes the active address binding to forward the SET massage to the network appliance; and
responsive to the URL received at the network appliance, the file is obtained from the RUS using HTTP protocol.

7. The method of claim 1, wherein the NAT is replaced by two or more NATs cascaded in respect to an active communication path existing between the network appliance and the remote update server ("RUS"), and the active address binding consists also of mutual addresses associations which exist between each two adjacent NATs.

8. A network appliance updateable and controllable by a remote update server ("RUS") the IP address and port number of which are known to said network appliance, which network appliance resides in a local location behind a NAT, which network appliance comprising:
a memory for pre-storing therein the IP address and destination port number of/on said RUS;
a generator for generating initialization messages;
a transmitter for intermittently transmitting the initialization message(s) through a predefined port on said network appliance to said RUS via said NAT, and
a response means responsive to update and control signals being received at said predefined port from said RUS via said NAT,
wherein,
said NAT assigns a public address to the private address of said network appliance for activating a corresponding address binding through which said RUS may transmit to said appliance update data and/or control signals to be responded by said response means.

9. A remote update server ("RUS") for updating information on a network appliance residing behind a NAT and having a private address, the internet Protocol ("IP") address of said RUS and a destination port number on it are known to said network appliance, comprising:
a network communication module, to receive through the destination port intermittently transmitted initialization messages that said NAT forwarded from said network appliance,
a response means, for generating a response to the received initialization messages; and
a transmitter for transmitting said response to said NAT through said destination port; wherein,
said NAT assigns a public address to the private address of said network appliance and associates it to the stored IP address and destination port number of said RUS for activating a corresponding address binding through which said RUS may transmit to said network appliance update data and/or control signals to be responded by the network appliance.

10. A method of updating, and generally controlling, a media gateway by a client via an intermediator and a NAT, which gateway includes a web-server and first and second ports internally interconnectable to bi-directionally deliver messages, and resides behind said NAT, comprising:
intermittently transmitting from said first port, and via said NAT, initialization messages to a first port on said intermediator;
responsive to the initialization messages being received via said first port on said intermediator, determining the source IP address of said NAT and forwarding the initialization message to said client via a second port on said intermediator;
responsive to the initialization messages being received at said client, transmitting to said second port on said intermediator update/control signal(s);
responsive to the update/control signal(s) being received at said intermediator, forwarding said update/control signal(s) to said lP address of said NAT via said first port on said intermediator, which NAT forwards said update/control signal(s) to said first port on said gateway; and
interconnecting said first and second ports on said gateway, whereby to deliver said update/control signal(s) to said web-server to update/control therewith said gateway.

11. The method of claim 10, wherein the first and second ports on the intermediator are TCP ports and the communication protocol used to updated/controlled the gateway is the hypertext transfer protocol ("HTTP").

12. The method of claim 10, wherein the gateway includes a private IP forward application ("IPFA") for controlling the internal interconnections between the first and second ports thereof

13. The method of claim 11, wherein the first and second ports of the intermediator constitute one pair of a plurality of pairs of first and second ports, the internal interconnectivity of them all being controlled by a public IP forward application ("IPFA") for allowing one or more clients to update/control one or more gateways, each of which may reside behind one NAT, or behind a plurality of cascaded NATs.

14. The method of claim 10, further comprising using a manager computer for remotely browsing a web application running on the gateway.
